# EUROPEAN PATENT SPECIFICATION

(11) **EP 0 429 411 B1**
(45) Date of publication and mention of the grant of the patent: **02.11.1994**
(21) Application number: 90830525.3
(22) Date of filing: 14.11.1990
(51) Int. Cl.: F16K 27/00, F15B 13/00

(54) **Teed valve**
Ventil für T-Abzweigung
Vanne pour branchement en T

(30) Priority: 14.11.1989 US 436315
(43) Date of publication of application: 29.05.1991
(73) Proprietor: CRYOLAB, INC., San Luis Obispo, California (US)
(72) Inventor: Hendry Ronald G., Los Osos, California (US); Nichols Joseph H., San Luis Obispo, California (US); Jones Michael E., Los Osos, California (US); Della Porta Francesco, San Luis Obispo, California (US)
(74) Representative: Adorno, Silvano

(56) References cited:
- DE-U- 1 925 426
- FR-A- 1 579 506
- GB-A- 2 178 139
- GB-A- 2 200 723

## Description

The present invention is in the field of valves, and more particularly relates to a structure formed in a unitary block of metal by boring operations. The structure includes a main bore from which a number of valved branch bores devolve. The structure reduces the number of welds required, which makes the structure particularly valuable for ultra-high purity applications such as arise in the semiconductor industry.

EP-A-0 392 992 in the name of the same applicant describes how a unitary block of metal can be formed into a manifold by a feeder bore that is intersected by one or more branch bores. Each of the branches is intersected by a stem cavity in which a valve is located. The particular design of these valves was such that the branch bore was not obstructed by offsets or constrictions in the flow path, but instead extended straight through the block.

Although valves having a straight and unobstructed flow path are highly desirable in a large number of applications, there remain other applications in which it is desirable to use valves of a different type, such as diaphragm valves. No known diaphragm valve has a clear straight bore. Accordingly, when the above-mentioned patent application was filed, the present inventors were doubtful that other types of valves, having offset flows, could be formed in a unitary block of metal. Subsequently, it has been found that other types of valves can be used, and it is one purpose of the present application to extend the scope of said application to cover the use of other types of valve in such a manifold.

In a technical paper entitled "Development of Contamination-Free Gas Components and Ultra-Clean Gas Supply System for ULSI Manufacturing" and published in 9th ICCCE Proceedings 1988, Institute of Environmental Sciences, Kanno and Ohmi report the development of a block manifold using diaphragm valves.

Also, an advertisement of the Motoyama Eng. Works, Ltd. shows two valves extending into a block.

The present invention differs from the valves shown in these publications in several crucial ways.

Every tee consists of two members: one which passes straight through and another member which dead ends into the first member.

In the present invention, the main or feed is the member that passes straight through, and the branch dead ends into the main. In contrast, in the valves shown in the publications, the feed is the member that dead ends, and the branch is the uninterrupted member. This subtle distinction prevents the valves shown in the publications from being placed one after the other along a main to form a distribution system.

Further evidence that the valves of these publications are not intended for use in distribution systems is drawn from the fact that the main has the same diameter as the branches. As a result, when both of the branches are open, flow in the branches is cut in half. The main is inadequate to supply both branches at full flow. In contrast, in the present invention the diameter of the main exceeds the diameter of the branch by a factor that permits the main to supply other branches downstream without unduly reducing the branch flow rate.

The publications do not show a single valve, but instead always show pairs of valves. In contrast, in one embodiment of the present invention, a single valve is used.

In further contrast, in another embodiment of the present invention, two branches extend from the main in opposite directions, forming a cross. The main is not interrupted. It does not appear possible to form a cross with the valves decribed in the publications because the main dead ends into the branch.

Thus it is seen that the present invention has a different structure from the valves described in the publications referred to above, and the structural difference greatly extends the usefulness of the present invention.

US-A-2 598 961 (Andrus) shows a manifold formed in a block, but it does not include any valves. It is intended for irrigation of a garden, and it appears that the diameter of the branches is the same as the diameter of the main

GB-A-2 200 733, which shows a valve having the features defined in the preamble of claim 1, discloses a block-like integral valve housing arrangement for supplying drinkable water with inlet and outlet ports having essentially perpendicular axes, wherein only the lower part of stopvalve base, provided as inlet port, is open in a zone which appears to be an end portion of the stem cavity, and the oulet port opens in an outer lateral portion of the same stem cavity. This arrangement requires a long stroke of the valve piston for clearing the whole cross-section area of the inlet port.

It is an object of the present invention to provide a teed valve which does not show the inconveniences and drawbacks of the above-mentioned valves of the prior art.

The teed valve according to the present invention is defined through the features of claim 1. Other preferred features are recited in the sub-claims 2-7.

A supply line or main of a particular diameter forms the straight-through segment of the tee, while a branch of a smaller diameter dead ends into the main. Flow in the branch is controlled by a valve in the branch. The block forms the body of the valve. In a first embodiment, the block includes portions that define the inlet port and outlet port of the valve. In other embodiments, the block includes portions that define the valve seat and the valve stem cavity, respectively.

Because the main extends straight through the block, the valved tee of the present invention is particularly well suited for use in constructing distribution systems in which a number of branches extend out from a single main. Such distribution systems can be formed by alternating the valved tees of the present invention with sections of the main. Alternatively, a distribution system can be formed by combining two or more of the valved tees of the present invention in a single block, as claimed in claim 8 with possible sub-claims 9, 10.

Because the main or feed has a cross sectional area that is a multiple of the cross sectional area of the branch, opening and closing of the valve in the branch has a smaller effect on the flow to other branches than if the main were smaller.

Another favorable result of having the main bore extend straight through the block is that a valved cross can be formed by combining two of the valved tees of the present invention in a single block.

The novel features which are believed to be characteristic of the invention, both as to organization and method of operation, together with further objects and advantages thereof, will be better understood from the following description considered in connection with the accompanying drawings in which several preferred embodiments of the invention are illustrated by way of example. It is to be expressly understood, however, that the drawings are for the purpose of illustration and description only and are not intended as a definition of the limits of the invention.
Figure 1 is a side elevational view showing a teed valve in accordance with a preferred embodiment of the present invention;
Figure 2 is a cross sectional view of the teed valve of Figure 1 in the plane 2-2 indicated in Figure 1;
Figure 3 is a cross sectional view of a second embodiment of the teed valve of the present invention;
Figure 4 is a diagram showing a distribution system formed in a single block in accordance with one aspect of the present invention; and,
Figure 5 is a diagram showing a distribution system formed by spacing individual teed valves along a main.

In accordance with the present invention, the tee and at least part of the valve are machined from a unitary block 12 of metal, preferably Type 316L stainless steel. Into the block 12 a main bore 14 is drilled. The main bore 14 extends completely through the block 12.

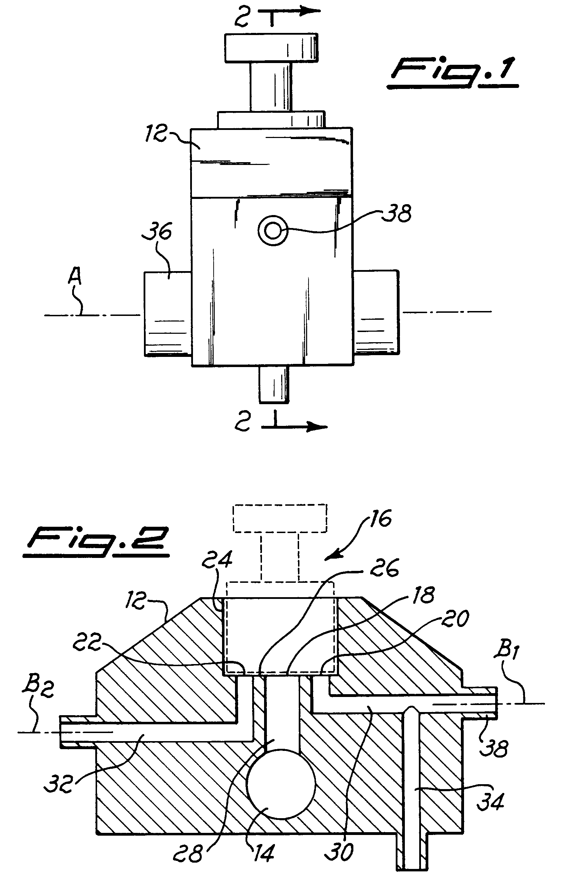

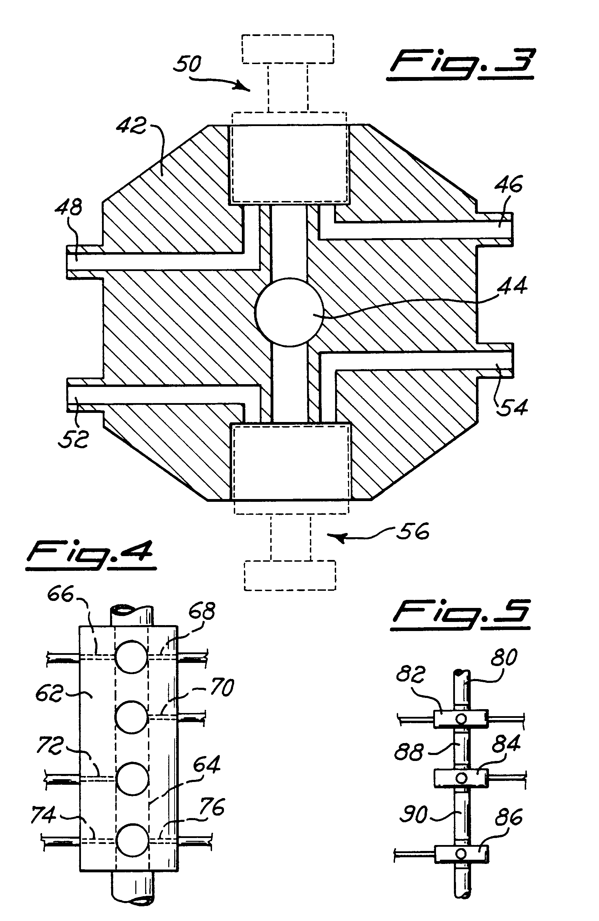

Portions of a valve element 16 are also machined into the block 12. In the preferred embodiment shown in the figures, a stem cavity 24 is produced, and the end of the stem cavity also serves as the seat 26 of the valve. The valve element 16 is shown in dashed lines to indicate that it has been removed from Figure 2 in the interest of clarity.

A passage 28 connects the main bore 14 to the inlet port 18 of the valve. When the valve is open, fluid is permitted to leave the valve through the first outlet port 20 and the second outlet port 22. The first outlet port 20 is connected to the first branch bore 30, and the second outlet port 22 is connected to the second branch bore 32. In the preferred embodiment, an auxiliary branch bore 34 is also produced, and it is connected to the first branch bore 30.

In the preferred embodiment shown in the drawings, a branch stub 38 is formed as a unitary portion of the block 12. The branch stub 38 is coaxial with the first branch bore 30 and has a length and outside diameter which adapt it for use as a branch stub. A similar main stub 36 provides an extension of the main bore 14.

As is readily apparent from Figure 2, the first branch bore 30 and the second branch bore 32 lie in a plane that is perpendicular to the axis A of the main bore 14. It is noteworthy that the axes B₁ and B₂ of the first branch bore 30 and the second branch bore 32 do not intersect the axis A of the main bore, nor are the axes B₁ and B₂ colinear. These relationships are different from those described in the above-mentioned patent application, and permit a wider range of valves to be used in a teed configuration.

In accordance with the present invention, the internal cross sectional area of the main bore 14 exceeds that of any of the branch bores 30 and 32. In the preferred embodiment, the area of the main bore is greater than 1.5 times the area of any branch bore. The factor of 1.5 is a compromise suitable for general use where it is unlikely that all of the branch bores will be open at the same time. Larger factors should be used where a larger likelihood of concurrent use of the branches exists.

Figure 3 illustrates the possibility of fabricating a valved reducing cross in a single block of metal 42. As in Figure 2, the main bore 44 extends perpendicular to the plane of the drawing. The branch bores 46 and 48 are controlled by the valve 50, while the branch bores 52 and 54 are controlled by the valve 56. One of the branch bores 46, 48 and one of the branch bores 52, 54 may serve as a purge port where required by the application.

Figure 4 shows a number of reducing teed valves formed in a single block of metal. This approach is appropriate when the application permits the branches to be spaced closely. The main bore 64 extends through the block 62, and the branch bores 66, 68, 70, 72, 74, 76 lie in planes that are perpendicular to the axis of the main bore.

In some applications, the branches must be widely spaced along the main 80, as shown in Figure 5. In this situation, teed valves 82, 84 and 86 comparable to those of Figures 1 and 2 can be connected by sections 88 and 90 of the main.

Thus it is seen that because the main bore is larger than the branch bores, the teed valve of the present invention is especially well adapted for use in distribution systems.

## Claims

1. A teed valve comprising:
- a block (12) of a rigid material;
- a main bore (14) extending through said block;
- a valve element (16) including a stem cavity (24) defined by portions of said block (12);
- a valve seat (26) being defined by portions of said block (12) which are coincident with an end portion of said stem cavity (24);
- a valve inlet port (18) and at least one outlet port (20, 22) being defined by portions of said block (12), which define said stem cavity (24);
- a passage (28) within said block (12) connecting the valve inlet port (18) with the main bore (14); and
- a number of branch bores (30, 32) equal to the number of outlet ports (20, 22) each of them extending into said block (12) to one respective outlet port (20, 22);
characterized in that
- said valve inlet port (18) and the at least one oulet port (20, 22) are essentially parallel to each other and are all open on said end portion of said stem cavity (24) or valve seat (26);
- the area of said main bore (14) is greater than 1.5 times the area of each branch bore (30, 32); and
- the valve is particularly suitable for controlling the flow of a highly purified gas.

2. The teed valve of claim 1 wherein said main bore (14) extends along an axis (A) and wherein said branch bore (30, 32) has an axis (B₁, B₂) that lies in a plane that is perpendicular to the axis (A).

3. The teed valve of claim 1 further comprising an auxiliary branch bore (34) extending into said block (12) to one of said branch bores (30, 32).

4. The teed valve of claim 1 further comprising a main stub (36) affixed to said block (12), coaxial with said main bore (14) and forming an extension of it.

5. The teed valve of claim 1 wherein said block (12) further comprises a hollow unitary protrusion coaxial with said main bore (14) and adapted for use as a main stub (36).

6. The teed valve of claim 1 further comprising at least one branch stub (38) affixed to said block (12), coaxial with one respective branch bore (30) and forming an extension of it.

7. The teed valve of claim 1 wherein said block (12) further comprises at least one hollow unitary protrusion coaxial with one respective branch bore (30) and adapted for use as a branch stub (38).

8. A valved reducing unit characterized by comprising, in a block (42; 62) of a rigid material with a common main bore (44; 64) extending therethrough along an axis (A), at least two teed valves (50, 56) according to claim 1, wherein the at least one branch bore (46, 48, 52, 54; 66, 68, 70, 72, 74, 76) of each valve has an axis that lies in a plane that is perpendicular to the axis (A) of said main bore (44; 64).

9. The valved reducing unit of claim 8, characterized in that the axes of all the branch bores are parallel to each other.

10. The valved reducing unit of claim 8, characterized in that the axes of all the branch bores lie in the same plane.

## Patentansprüche

1. Ventil für eine T-Abzweigung mit
- einem Block (12) aus einem starren Material;
- einer Hauptbohrung (14), die sich durch den Block erstreckt;
- einem Ventilelement (16), das einen Schafthohlraum (24) aufweist, der durch Abschnitte des Blocks (12) gebildet wird;
- einem Ventilsitz (26), der durch Abschnitte des Blocks (12) gebildet wird, die mit einem Endabschnitt des Schafthohlraumes (24) zusammenfallen;
- einer Ventileinlaßöffnung (18) und mindestens einer Auslaßöffnung (20, 22), die durch Abschnitte des Blocks (12), die den Schafthohlraum (24) bilden, gebildet werden;
- einem Kanal (28) innerhalb des Blocks (12), der die Ventileinlaßöffnung (18) mit der Hauptbohrung (14) verbindet; und
- einer Vielzahl von Zweigbohrungen (30, 32), deren Anzahl der Zahl der Auslaßöffnungen (20, 22) entspricht und die sich jeweils in den Block (12) bis zu einer entsprechenden Auslaßöffnung (20, 22) erstrecken;
dadurch gekennzeichnet, daß
- die Ventileinlaßöffnung (18) und die mindestens eine Auslaßöffnung (20, 22) im wesentlichen parallel zueinander angeordnet und alle am Endabschnitt des Schafthohlraumes (24) oder Ventilsitzes (26) offen sind;
- die Fläche der Hauptbohrung (14) größer ist als das 1,5-fache der Fläche einer jeden Zweigbohrung (30, 32); und
- das Ventil besonders geeignet ist zum Steuern des Durchflusses eines stark gereinigten Gases.

2. Ventil nach Anspruch 1, bei dem sich die Hauptbohrung (14) entlang einer Achse (A) erstreckt und die Zweigbohrung (30, 32) eine Achse (B₁, B₂) besitzt, die in einer Ebene liegt, die senkrecht zur Achse (A) verläuft.

3. Ventil nach Anspruch 1, das des weiteren eine Hilfszweigbohrung (34) aufweist, die sich in den Block (12) zu einer der Zweigbohrungen (30, 32) erstreckt.

4. Ventil nach Anspruch 1, das des weiteren einen am Block (12) befestigten Hauptansatz (36) aufweist, der sich koaxial zur Hauptbohrung (14) erstreckt und eine Verlängerung derselben bildet.

5. Ventil nach Anspruch 1, bei dem der Block (12) des weiteren einen hohlen einheitlichen Vorsprung aufweist, der koaxial zur Hauptbohrung (14) verläuft und als Hauptansatz (36) dient.

6. Ventil nach Anspruch 1, das des weiteren mindestens einen Zweigansatz (38) aufweist, der am Block (12) befestigt ist, koaxial zu einer entsprechenden Zweigbohrung (30) verläuft und eine Verlängervng derselben bildet.

7. Ventil nach Anspruch 1, bei dem der Block (12) des weiteren mindestens einen hohlen einheitlichen Vorsprung besitzt, der koaxial zu einer entsprechenden Zweigbohrung (30) verläuft und als Zweigansatz (38) dient.

8. Ventil-Reduziereinheit, dadurch gekennzeichnet, daß sie in einem Block (42; 62) aus einem starren Material mit einer sich durch den Block entlang einer Achse (A) erstreckenden gemeinsamen Hauptbohrung (44; 64) mindestens zwei Ventile (50, 56) für eine T-Abzweigung gemäß Anspruch 1 aufweist, wobei die mindestens eine Zweigbohrung (46, 48, 52, 54; 66, 68, 70, 72, 74, 76) eines jeden Ventils eine Achse besitzt, die in einer Ebene liegt, die senkrecht zur Achse (A) der Hauptbohrung (44; 64) verläuft.

9. Ventil-Reduziereinheit nach Anspruch 8, dadurch gekennzeichnet, daß die Achsen sämtlicher Zweigbohrungen parallel zueinander verlaufen.

10. Ventil-Redusiereinheit nach Anspruch 8, dadurch gekennzeichnet, daß die Achsen sämtlicher Zweigbohrungen in der gleichen Ebene liegen.

## Revendications

1. Vanne pour branchement en T comprenant :
- un bloc (12) en une matière rigide;
- un perçage principal (14) s'étendant à travers ce bloc;
- un élément de vanne (16) comportant une cavité (24) délimitée par des portions du bloc (12);
- un siège de vanne (26) délimitée par des portions du bloc (12) qui coïncident avec une portion d'extrémité de la cavité (24);
une lumière d'entrée (18) et au moins une lumière de sortie (20,22) étant délimitées par des portions du bloc (12), qui délimitent la cavité (24);
un passage (28) à l'intérieur du bloc (12) reliant la lumière d'entrée (18) au perçage principal (14);
et
- des perçages de dérivation (30,32) en nombre égal à celui des lumières de sortie (20,22), chacun d'eux s'étendant dans le bloc (12) jusqu'à la lumière de sortie correspondante;
caractérisèe en ce que
la lumière d'entrée (18) et au moins l'une des lumières de sortie (20,22) sont pratiquement parallèles l'une à l'autre et débouchent toutes à ladite portion d'extrémité de la cavité (24) ou siège de vanne (26);
la section du perçage principal (14) est supérieure à 1,5 fois la section des perçages de dérivation (30,32);
et
la vanne convient en particulier au contrôle du débit d'un gaz hautement purifié.

2. Vanne pour branchement en T selon la revendication 1 dans laquelle le perçage principal (14) s'étend selon un axe (A) et dans lequel le perçage de dérivation (30,32) a un axe (B1,B2) qui se trouve dans un plan perpendiculaire à l'axe (A).

3. Vanne à branchement en T selon la revendication 1 qui comprend en outre un perçage de dérivation auxiliaire (34) s'étendant dans le bloc (12) jusqu'à l'un des perçages de dérivation (30,32);

4. Vanne à branchement en T selon la revendication 1 comprenant un embout (36) fixé au bloc (12), coaxial au perçage principal (14) et en constituant un prolongement.

5. Vanne à branchement en T Selon la revendication 1 dans laquelle le bloc (1) comporte une saillie creuse solidaire du bloc (12), coaxial au perçage principal (14) et propre à être utilisé comme embout principal (36).

6. Vanne à branchement en T selon la revendication 1 comprenant en outre au moins un embout de dérivation (38) fixé au bloc (12), coaxial au perçage de dérivation correspondant (30) et en constituant un prolongement.

7. Vanne de branchement selon la revendication 1 dans laquelle le bloc (12) comprend au moins une saillie creuse solidaire du bloc, coaxiale à l'un des perçages de dérivation (30) et propre à être utilisée comme embout de dérivation (38).

8. Ensemble de réduction à vanne caractérisé en ce qu'il comprend, dans un bloc (42,62) en matière rigide avec un perçage principal (44,64) le traversant suivant un axe (A), au moins deux vannes à branchement en T (50,56) selon la revendication 1, dans lequel au moins l'un des perçages de dérivation (46,48,52,54; 66,68, 70, 72, 74, 76) de chaque vanne a un axe qui se trouve dans un plan qui est perpendiculaire à l'axe (A) du perçage principal (44,64).

9. Ensemble de réduction à vanne selon la revendication 8, caractérisé en ce que les axes de tous les perçages de dérivation sont parallèles les uns aux autres.

10. Ensemble de réduction à vanne selon la revendication 8, caractérisé en ce que les axes de tous les perçages de dérivation se trouvent dans le même plan.
